# EUROPÄISCHE PATENTSCHRIFT

(11) **EP 3 445 567 B1**
(45) Veröffentlichungstag und Bekanntmachung des Hinweises auf die Patenterteilung: **10.07.2019**
(21) Anmeldenummer: 17719984.1
(22) Anmeldetag: 19.04.2017
(51) Int. Cl.: B29C 64/264

(54) **VORRICHTUNG UND VERFAHREN ZUR STEIGERUNG DER ANHAFTUNG EINER BAUTEILSCHICHT AN EINEM TRÄGEROBJEKT**
DEVICE AND METHOD FOR INCREASING THE ADHESION OF A COMPONENT LAYER TO A CARRIER OBJECT
DISPOSITIF ET PROCÉDÉ POUR AUGMENTER L'ADHÉRENCE D'UNE COUCHE D'UN ÉLÉMENT À UN OBJET SUPPORT

(30) Priorität: 19.04.2016 AT 503502016
(43) Veröffentlichungstag der Anmeldung: 27.02.2019
(73) Patentinhaber: Stadlmann, Klaus, 1030 Wien (AT)
(72) Erfinder: Stadlmann, Klaus, 1030 Wien (AT)
(74) Vertreter: Özer, Alpdeniz
(86) Internationale Anmeldenummer: PCT/AT2017/060098
(87) Internationale Veröffentlichungsnummer: WO 2017/181209

(56) Entgegenhaltungen:
- DE-A1- 10 326 223
- US-A- 4 752 498
- US-A1- 2010 291 489
- US-A1- 2012 248 657
- US-A1- 2015 202 805

## Beschreibung

Die Erfindung betrifft ein Verfahren zum Anhaften eines Objekts an einem Objektträger in einem stereolithografischen Prozess gemäss Anspruch 1, wobei das Objekt durch Aushärtung einer fotosensitiven Substanz mittels Aushärte-Strahlung gebildet wird, wobei zum Anhaften des Objekts zumindest in einem Teilbereich am Objektträger eine Sekundärstrahlung in einer von der Richtung der Aushärte-Strahlung verschiedenen Richtung zum Objektträger gestrahlt wird. Weiters bezieht sich die Erfindung auf eine Vorrichtung zur Durchführung dieses Verfahrens gemäss Anspruch 6.

Es sind Verfahren und Vorrichtungen bekannt, welche das Ziel haben, die Anhaftung von Bauteilschichten zu Beginn eines stereolithographischen Prozesses zu steigern. Ein Beispiel dafür ist die in WO 2010/045951 beschriebene Technik, bei der von oben durch eine Bauplattform, deren Unterseite Licht-durchlässig ist, zusätzlich Licht in eine fotoreaktive Substanz eingekoppelt wird. Dies hat zur Folge, dass die zusätzliche Strahlung eine bessere Anhaftung der ersten Bauteilschichten ermöglicht. Diese bekannte Lösung hat jedoch diverse Nachteile: Beispielsweise befindet sich die Lichtquelle in der Bauplattform selbst und wird mit dieser mitbewegt, obwohl die Lichtquelle nur während der ersten Bauteilschichten zum Einsatz kommt. Dies erfordert die Versorgung der Bauplattform mit Strom. Weiters werden durch die Integration der Lichtquelle in die Bauplattform deren Kosten wesentlich erhöht und es kann kein System geschaffen werden, welches eine einmalige Nutzung zulässt. Auch kann die Bauplattform nicht oder nur schwer gleichzeitig mit dem darauf befindlichen Teil in eine Reinigungsanlage oder dergl. gelegt werden, da es zum Eindringen der Reinigungsflüssigkeit in die Bauplattform und zur Kontaminierung der Lichtquelle kommen kann.

Aus der US 2015/290874 A1 ist eine Vorrichtung bekannt, bei der eine Lichtführung um eine Wanne herum zu einem oberhalb davon befindlichen Objekt gezeigt ist. Ein dabei verwendeter Spiegel dient zugleich zur Beleuchtung der Wannenunterseite.

Aus der US 2012/0248657 A1 ist eine Vorrichtung und ein Verfahren der additiven Fertigung unter Verwendung von Photopolymerisation bekannt.

Aufgabe der Erfindung ist es, die aus dem Stand der Technik bekannten Schwierigkeiten und Probleme zu lösen, eine bessere und wirtschaftlichere Integration in ein Anlagenkonzept zur Herstellung von dreidimensionalen Objekten zu ermöglichen und ein besseres Anhaften der ersten Objektschichten während eines Bauprozesses zu erzielen.

Zur Lösung dieser Aufgabe ist beim erfindungsgemäßen Verfahren vor allem vorgesehen, dass die Sekundärstrahlung dem allgemein plattenförmigen, strahlungsdurchlässigen Objektträger seitlich zugeführt und innerhalb des Objektträgers umgelenkt wird.

Die erfindungsgemäße Vorrichtung zeichnet sich aus durch eine in Abstand vom Objektträger seitlich angeordnete Sekundärstrahlungsquelle sowie dadurch, dass der Objektträger zumindest teilweise für die Sekundärstrahlung durchlässig ist.

Bei der vorliegenden Stereolithographie-Technik wird somit durch die Sekundärstrahlung ein Anhaften des Objekts am Objektträger bewerkstelligt. Dabei befinden sich die Lichtquellen nicht in dem Objektträger; die Lichtquellen können sich in einem örtlichen Abstand hievon befinden und können beispielsweise um den Objektträger herum angeordnet sein, wobei der Objektträger mehrere zumindest teilweise lichtdurchlässige Öffnungen oder Fenster besitzt, durch die das Licht eingekoppelt bzw. ausgekoppelt werden kann. Der Objektträger kann beispielsweise unabhängig gegenüber der sekundären Lichtquelle und/oder der primären Lichtquelle bewegt werden, und beide Lichtquellen können so angeordnet und ausgeführt sein, dass sie eine Bestrahlung des Objektträgers bzw. das Einkoppeln von Licht über einen Bereich zulassen, welcher zumindest die erste und/oder die ersten zwei, fünf, zehn oder zwanzig Bauteilschicht(en) umfasst.

Unter "Licht" bzw. "Strahlung" wird hier jede Art von elektromagnetischer Strahlung verstanden, wie z.B. auch ultraviolette Strahlung oder Infrarotstrahlung. Die Lichtquellen besitzen zumindest einen Strahlungsemitter, wie zum Beispiel eine LED, der bzw. die Strahlung in zumindest einem bestimmten WellenlängenBereich abgeben kann; bevorzugt besitzen die Lichtquellen mehrere Strahlungsquellen, wie zum Beispiel mehrere LEDs mit verschiedenen Wellenlängen und Abstrahlverhalten, so dass ein gesamter Wellenlängenbereich von zum Beispiel 365 nm bis 405 nm abgedeckt bzw. selektiv angesprochen werden kann. Bevorzugt wird eine Wellenlänge zum Einkoppeln in die Bauplattform eingesetzt, welche ein tieferes Durchhärten der fotoreaktiven Substanz ermöglicht. Beispielweise kann dies erreicht werden, indem sich die zentrale Wellenlänge in einem Wellenlängenbereich befindet, in dem ein eingesetzter Photostarter (Photoinitiator) weniger potent ist (zB 405 nm). Dabei kann sich gegebenenfalls die zentrale Wellenlänge zum Beispiel im UV-Bereich um 5 nm, 10 nm, 20 nm, 40 nm oder mehr, je nach eingesetztem Photoinitiator, von der zum Aushärten der fotoreaktiven Substanz eingesetzten Primär-Strahlung unterscheiden. Ferner können die Lichtquellen zeitlich und/oder in ihrer Intensität und unabhängig voneinander gesteuert werden.

Die Bauplattform ist konstruktiv bevorzugt so ausgestaltet, dass ein möglichst effizientes und streustrahlungsarmes Einkoppeln der Strahlung ermöglicht werden kann. Insbesondere kann die Bauplattform so ausgestaltet sein, dass sie als eine Art "Lichtleiter" fungiert und beispielweise eine Kammer aufweist, in der sich eine zumindest teilweise spiegelnde Fläche (wie z.B. eine Spiegelfolie, ein Spiegelblech usw.) oder beispielsweise ein örtlich verstellbaren Spiegel befindet. Die Strahlung kann so in die Bauplattform bzw. den Objekträger eingekoppelt werden, dass eine Variation der örtlichen Intensität-Maxima erzielt werden kann; dies kann beispielsweise durch Änderung der Position des Objektträgers, durch Änderung des Einfallswinkels der Strahlung, und/oder durch eine örtliche Änderung eines Umlenkspiegels innerhalb des Objektträgers, durch Änderung des LED-Stromes, durch den in der Primär-Lichtquelle vorhandenen DMD, erfolgen.

Bevorzugt können beide Lichtquellen auch für andere Zwecke, wie zum Beispiel zur Beleuchtung des Innenraumes, der Signalisierung eines Prozessstadiums (zB Fertigstellung des Objektes, Prozess-Pause und Prozess-Abbruch), zur Aushärtung der restlichen fotoreaktiven Substanz und zur Nachbelichtung der generierten Bauteile sowie, beispielsweise als Lichtquelle in Kombination mit einer Kamera, zum 3D-Scannen des generierten Bauteils eingesetzt werden. Dazu kann zum Beispiel zumindest eine der eingesetzten Lichtquellen, je nach angestrebter Funktion, entsprechend aus zumindest einer Strahlungsquelle (LED) mit einer zentralen Wellenlänge aufgebaut werden, und/oder mit einer Optik versehen sein, und sie kann dabei gezielt in Bezug auf die Intensität, die Strahlungsdauer, gegebenenfalls in Bezug auf das Strahlungsmuster (zB ein Linienmuster) und die Position des Strahlungseintrages von einer Steuerung einzeln oder abschnittsweise (zB gemäß Zeilen und Spalten eines LED-Arrays) angesteuert werden. Dies ermöglicht einen orts-abhängigen, intensitäts-abhängigen und zeit-abhängigen Strahlungseintrag in die Bauplattform sowie die Möglichkeit, an verschiedenen Positionen des LED-Arrays abzustrahlen bzw. Strahlung einzukoppeln und/oder verschiedene Emitter bzw. Wellenlängen zu nutzen. So kann beispielsweise beim Einsatz von zumindest einem UV-LED-Panel nur der Strahlungs-Bereich angesteuert werden, der in den Objektträger an der entsprechenden Position eingekoppelt werden kann; zu einem späteren Zeitpunkt, wie etwa nach Fertigstellung des dreidimensionalen Körpers und entsprechenden Nachbehandlungs-Schritten (Reinigung des Objektes usw.), kann das generierte Objekt durch beispielsweise Ansteuerung aller UV-LEDs bzw. aller eingesetzten Panels, zum Beispiel mit Hilfe der Sekundär-Lichtquelle, und gegebenenfalls der Primär-Lichtquelle, nachbelichtet werden.

Im Hinblick auf eine einfache, preiswerte Ausbildung wird bevorzugt, dass die Sekundärstrahlung von der Aushärte-Strahlung abgeleitet wird. Andererseits ist es auch vielfach günstig, wenn als Sekundärstrahlung eine von der Aushärte-Strahlung unabhängige Strahlung eingesetzt wird. Von Vorteil ist es weiters, wenn die Sekundärstrahlung dem Objektträger über einen Lichtleiter zugeführt wird. Auch kann vorgesehen werden, dass die Sekundärstrahlung während des Anhaft-Prozesses über einen Anhaftbereich verstellt wird.

Hinsichtlich der vorliegenden Vorrichtung ist es von besonderem Vorteil, wenn die Sekundär-Strahlungsquelle durch einen Lichtleiter gebildet ist. Hierbei ist es weiters günstig, wenn der Lichtleiter mit einer Stereolithografie-Hauptstrahlungsquelle lichtleitend verbunden ist.

Andererseits ist es auch vorteilhaft, wenn eine von einer Hauptstrahlungsquelle unabhängige Sekundär-Strahlungsquelle vorgesehen ist.

Es ist ferner günstig, wenn der Objektträger teilweise für die Strahlung durchlässig und zumindest teilweise spiegelnd ausgeführt ist, um die Sekundärstrahlung zu einem Anhaftbereich für das Objekt umzulenken. Auch kann der Objektträger eine Spiegelfläche enthalten. Dabei ist es überdies vorteilhaft, wenn die Spiegelfläche diffus spiegelnd ausgeführt ist. Andererseits kann auch vorgesehen werden, dass der Objektträger einen beweglich angeordneten Umlenkspiegel enthält. Schließlich wird bevorzugt, dass der Objektträger eine für die Strahlung zumindest teilweise durchlässige Anhaft-Bodenplatte aufweist.

Die Erfindung wird nachfolgend anhand von bevorzugten Ausführungsbeispielen, auf die sie jedoch nicht beschränkt sein soll, und unter Bezugnahme auf die Zeichnung noch weiter erläutert. Im einzelnen zeigen:
Fig. 1 eine schematische Ansicht eines Ausfürungsbeispiels einer Stereolithographie-Vorrichtung;
die Figuren 2, 3 und 4 Ansichten von gegenüber Fig. 1 modifizierten Ausführungsformen einer solchen Vorrichtung;
Fig. 5 und Fig. 5a Varianten der Erfindung, was die Form der Bestrahlung betrifft; und
die Figuren 6 bis 10 Varianten der Strahlungseinkopplung in eine Bauplattform;

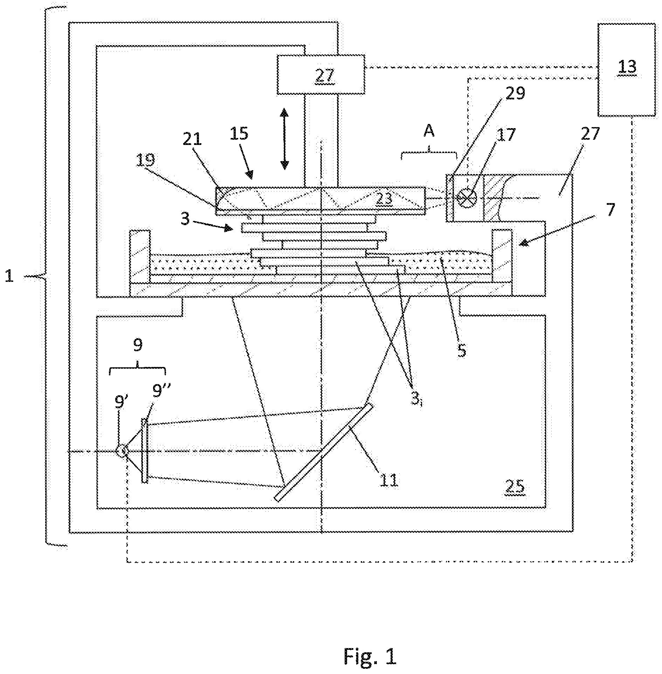

Fig. 1 zeigt beispielhaft ein Ausführungsbeispiel einer Stereolithographie-Vorrichtung 1, teilweise in einer Schnittdarstellung, wobei diese Vorrichtung 1 zum schichtweisen Generieren von zumindest einem dreidimensionalen Körper bzw. Objekt 3 aus einzelnen Schichten 3, 3ᵢ ausgestaltet ist, der bzw. das durch selektives Verfestigen bzw. Aushärten einer fotoreaktiven Substanz 5 hergestellt wird, welche sich in einer Wanne 7 befindet, wobei mit Hilfe einer Primär-Lichtquelle 9 und gegebenenfalls mit Hilfe eines Umlenkspiegels 11 eine Schichtinformation erzeugt wird. Die Primär-Lichtquelle 9 kann ein steuerbarer Laser, bevorzugt eine pixelbasierte digitale Maskenprojektionseinheit sein. Die Primär-Lichtquelle 9 kann über eine Steuereinrichtung 13 gesteuert werden. Die fotosensitive Substanz 5 ist flüssig, wobei unter dem Begriff "flüssig" alle Flüssigkeiten beliebiger Viskosität, einschließlich pastöser Substanzen, sowie gefüllte oder pigmentierte Flüssigkeiten verstanden werden. Die Primär-Lichtquelle 9 besteht beispielsweise aus einem Strahlungsemitter 9' (z.B. einer UV-LED) und einer Masken-Belichtungseinrichtung 9" wie z.B. einem DMD (Digital Mirror Device) - bzw. einem DLP (Digital Light Processing)- Aufbau, der in der Lage ist, ein pixelbasiertes Bild zu erzeugen.

Die erzeugten, durch die Primär-Lichtquelle 9 ausgehärteten Schichten 3ᵢ haften an einer als Objektträger dienenden Bauplattform 15, die überdies zumindest teilweise für die Strahlung von mindestens einer seitlich angeordneten Sekundär-Lichtquelle 17 transparent ist und zumindest teilweise spiegelnd ausgeführt sein kann, um zu ermöglichen, dass die Sekundär-Strahlung der Lichtquelle 17 durch die zumindest teilweise transparente Bodenplatte 19 der Bauplattform 15 zufolge Reflexion nach unten austreten kann. Unter Sekundär-Strahlung wird Strahlung verstanden, die ebenfalls zur Aushärtung der fotoreaktiven Substanz 5 geeignet ist, zumindest eine zentrale Wellenlänge (z.B. 405 nm) und zumindest einen Strahlungsquellen-Typ (z.B. LED) aufweist und, bevorzugt unabhängig von der Primär-Lichtquelle 9, durch die Steuereinrichtung 13 kontrolliert werden kann. In dem in Fig. 1 gezeigten Ausführungsbeispiel erfolgt die Ablenkung der Sekundär-Strahlung durch beispielsweise einen Reflektor 21 (z.B. einen Spiegel, eine spiegelnde Folie, oder durch den Innenraum selbst), der sich innerhalb der Bauplattform 9, in einem Sekundärstrahlungsraum 23, befindet oder durch diesen gebildet wird. Die Primär-Lichtquelle 9 befindet sich gemäß Fig. 1 unterhalb der Wanne 7 in einem Maschinenraum 25, und sie kann, beispielsweise an einem Rahmen 27, beweglich angeordnet sein.

Gemäß Fig.1 ist die Sekundär-Strahlungsquelle 17 so angeordnet, dass sie zumindest über einen gewissen Bereich Sekundär-Strahlung in die Bauplattform 15 einleiten kann, beispielweise zu Beginn des Bauprozesses (z.B. über die ersten 2, 5, 10 oder 20 Schichten), und zumindest nur vorübergehend in direkten Kontakt mit der Bauplattform 15 steht, bevorzugt in einem Abstand A (z.B. 0,1 mm, 1 mm bis zu 10 mm - je nach Ausführungsvariante) zur Bauplattform 15 angeordnet ist. Die Bauplattform 15 kann entsprechend dem Prozessfortschritt durch einen Aktuator 27 und mit Hilfe der Steuereinrichtung 13 zum Beispiel gegenüber der Wanne 7 angehoben bzw. abgesenkt werden.

Die Sekundär-Strahlungsquelle 17 kann, wie in Fig. 1 dargestellt beispielsweise am Maschinen-Rahmen 27 an einer geeigneten Stelle angebracht sein, und sie gibt die Sekundär-Strahlung beispielsweise durch ein Schutzfenster 29 hindurch ab, wobei auch optische Elemente (Linsen, Streuplatten, Lichtleiter usw.) zwischen der Sekundär-Strahlungsquelle 17 und der Bauplattform 15 angeordnet sein können.

Durch eine entsprechende Anordnung und den Einsatz mehrerer Sekundär-Strahlungsquellen 17 oder durch Aufteilung der Sekundär-Strahlung kann eine nahezu ringförmige Beleuchtung der Bauplattform 15 durch das seitliche Einkoppeln von mehreren Seiten ermöglicht werden.

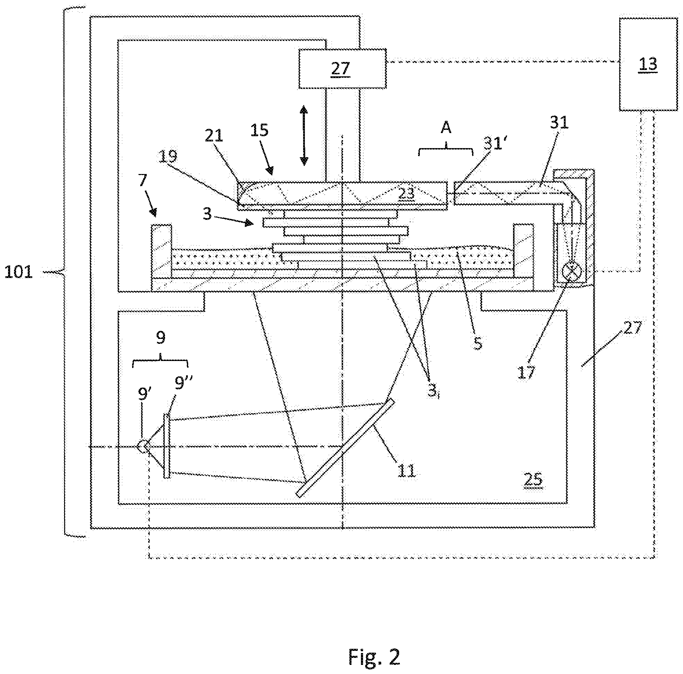

Fig. 2 zeigt im Vergleich zu Fig. 1 eine Ausführungsform einer Stereolithographie-Vorrichtung 101, in welcher zumindest eine Sekundär-Strahlungsquelle 17 beispielsweise unterhalb der Bauplattform 15 im Rahmen 27 angeordnet ist und die Sekundär-Strahlung durch zumindest einen Lichtleiter 31 (z.B. einem Lichtstab), der für die Sekundär-Strahlung zumindest teilweise transparent ausgeführt ist, geleitet wird, wobei gegebenenfalls wie in Fig.2 dargestellt eine 90°-Umlenkung möglich ist, um Sekundär-Strahlung zumindest von einer Seite in die Bauplattform 15 einzukoppeln. Der Lichtwellenleiter 31 kann abnehmbar mit dem Rahmen 27 bzw. der Sekundär-Lichtquelle 17 verbunden sein. Diese Anordnung schützt die Sekundär-Lichtquelle 17 vor Verschmutzung und ermöglicht eine Gestaltung der Auskoppelfläche des Lichtleiters 31 in geometrischer und optischer Hinsicht (z.B. kreisförmig, rechteckig, linsenförmig usw.) sowie das Einkoppeln unter einem gewissen Winkel durch dessen geometrische Gestaltung; bevorzugt ist die Geometrie des Lichtleiters 31 so ausgeführt, dass möglichst keine Streustrahlen austreten können. Der bevorzugt einteilig ausgeführte Lichtleiter 31 kann mit einer für die Sekundär-Strahlung nicht-transparenten und/oder reflektierenden Hülle, Lackschicht usw. versehen sein, um das Austreten von Streustrahlung zu unterbinden und um den Lichtaustritt von Sekundär-Strahlung aus der Stirnfläche 31' zu maximieren.

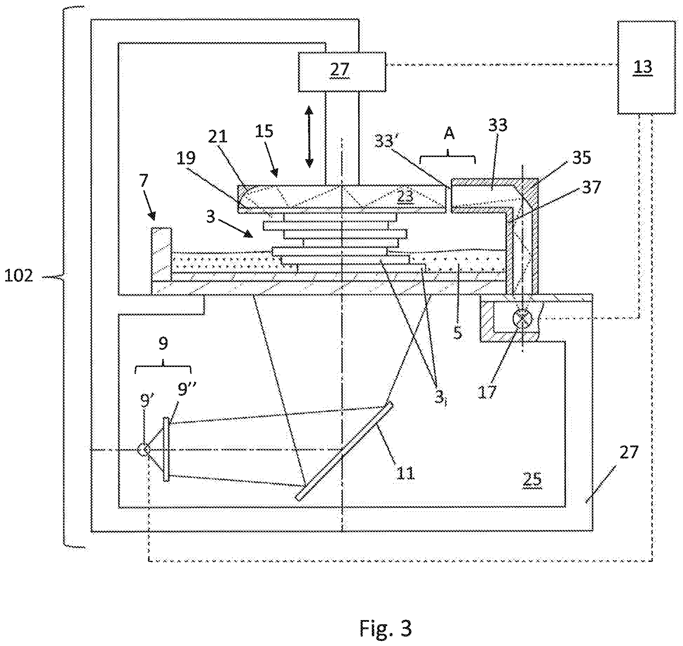

Fig. 3 zeigt eine weitere Ausführungsform einer Stereolithographie-Vorrichtung 102, in der die Sekundär-Strahlung an einer Seite beispielsweise von unten mit Hilfe eines Randteils 33 der Wanne 7 umgelenkt, im einzelnen bevorzugt mit zumindest einem und zumindest einteilig ausgeführten, für die Sekundär-Strahlung zumindest teilweise transparenten Randteil 33 der Wanne 7, der als Lichtleiter für die Sekundär-Strahlung fungiert, die so in die Bauplattform 15 seitlich zumindest an einer Stelle eingekoppelt werden kann. Der Randteil 33 der Wanne 7 kann zur Minimierung bzw. zur Verhinderung der Ausbreitung von Streustrahlung innerhalb der Wanne 7 und/oder durch die Wanne 7, die zu einer ungewünschten Aktivierung der fotosensitiven Substanz 5 führen könnte, bevorzugt durch zumindest eine nicht-transparente, z.B. zumindest eine teilweise reflektierende Seitenwand und/oder Lackschichten, z.B. 35, 37, abgeschirmt sein, so dass nur eine seitliche Einstrahlung in die Bauplattform 15 über die Stirnfläche 33' erfolgt.

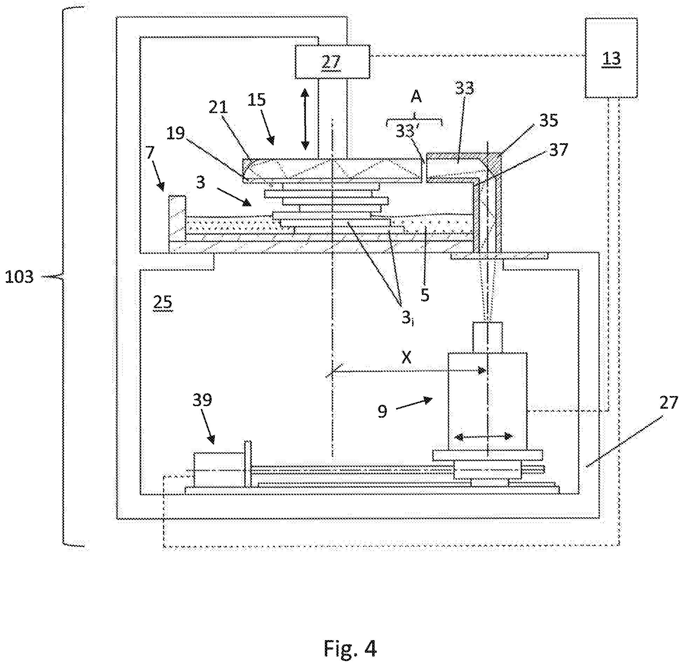

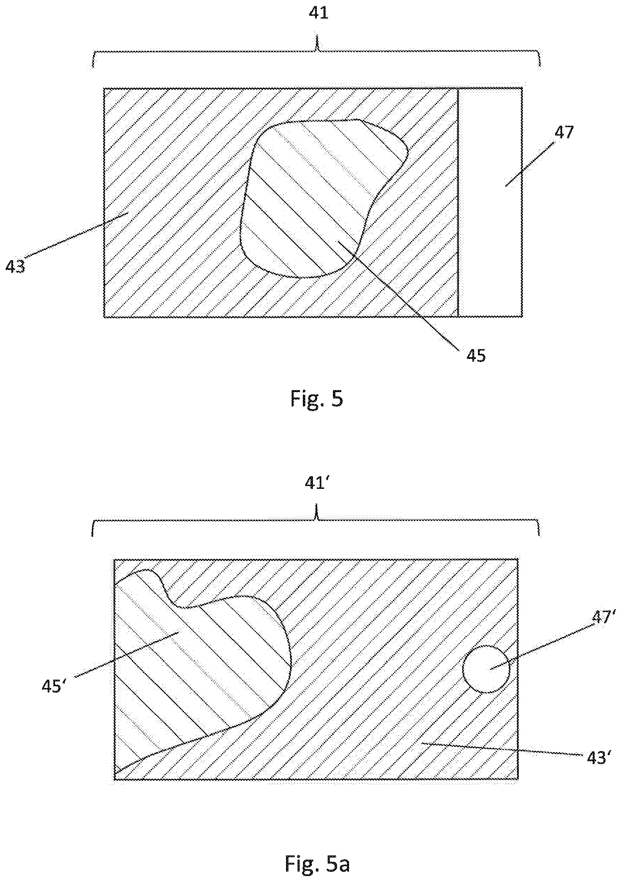

Die in Fig. 4 veranschaulichte Stereolithographie-Vorrichtung 103 hat eine bewegliche und gegebenenfalls fokussierbare Lichtquelle 9 (hier dargestellt als Systemeinheit), die durch die Steuereinheit 13 und mit Hilfe zumindest eines Linearmotors 39, welcher beispielsweise am Rahmen 27 angebracht sein kann, an eine jeweilige Stelle X im Maschinenraum 25 bewegt werden kann und/oder deren Fokus durch die Steuereinrichtung 13 eingestellt werden kann, um Primär-Strahlung mit Hilfe des Lichtwelllenleiters 33 als "Sekundär-Strahlung" in die Bauplattform 15 einzuleiten. In einer anderen Variante kann beispielsweise ein spezielles Belichtungs-Bild, z.B. ein Teil-Bild oder ein Randzonen-Bild. s. Fig.5 und Fig. 5a, dazu genutzt werden, um Primär-Strahlung, ausgestrahlt durch die Lichtquelle 9, gegebenenfalls über ein zumindest teilweise bewegliches Spiegelsystem, in den Lichtleiter 33 zu leiten, wobei das abgestrahlte Bild nicht fokussiert sein muss. Nach der erfolgreichen Einkopplung von Strahlung in den Lichtwellenleiter 33 wird die Lichtquelle 9 von der Steuereinheit 13 mit Hilfe der Lineareinheit 39 beispielsweise in ihre Ursprungsposition zurückbewegt. Bevorzugt ist die Primär-Strahlungsquelle 9 fokussierbar ausgeführt und beweglich, besonders bevorzugt kann, z.B. durch Bewegung eines nicht dargestellten Umlenkspiegels oder durch Wegklappen eines Umlenkspiegels, die Primär-Strahlung direkt mit oder ohne Bewegung der Lichtquelle 9 in den Lichtleiter 33 eingekoppelt werden.

Fig.5 und Fig. 5a zeigen mögliche Beispiele einer Belichtungsmaske 41 bzw. 41", welche zum Einkoppeln von Primär-Strahlung in zumindest einen Lichtwellenleiter 33 (s. Fig. 4) und damit zur Ausleuchtung der Bauplattform 15 mit Primär-Strahlung dient, wobei beispielsweise der Bereich 47 bzw. 47' zum Einkoppeln genutzt werden kann, und wobei zumindest teilweise eine Schichtinformation 45 bzw. 45` zur Bildung einer Bauteilschicht 3ᵢ und gegebenenfalls ein nicht belichteter Bereich 43, 43' vorhanden sein kann. Mit Hilfe des belichteten Bereiches 47,47' wird die Primär-Strahlung in den Lichtwellenleiter eingeleitet; dabei kann die eingekoppelte Wellenlänge der zum Aushärten der Schicht verwendeten Wellenlängen entsprechen, z.B. 388 nm betragen; bevorzugt kann die Primär-Lichtquelle 9 zusätzlich eine zweite Strahlung mit einer anderen Wellenlänge (z.B. 405nm) abgeben, die zumindest zum Ausleuchten der Bauplattform 15 genutzt wird.

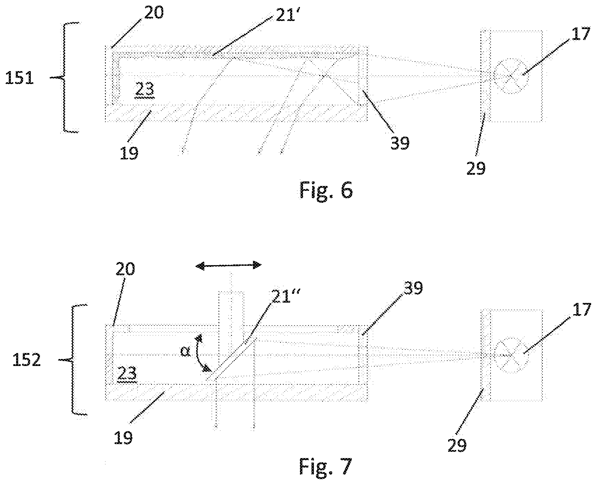

Fig. 6 zeigt eine vorteilhafte Ausführungsvariante einer Bauplattform 151, in der ein Sekundärstrahlungsraum 23 gebildet ist, welcher zumindest teilweise mit einer diffus reflektierenden, teilweise gewölbten Oberfläche, zum Beispiel einer reflektierenden Folie 21' oder Beschichtung, ausgestattet sein kann, welche die seitlich eintretende Sekundär-Strahlung möglichst gleichmäßig über die zumindest teilweise transparente Bodenplatte 19 abstrahlt. Dabei kann seitlich ein Fenster 39 den Sekundärstrahlungsraum 23 zumindest teilweise abschließen und zumindest teilweise durchlässig für die Sekundär-Strahlung sein, um ein Einkoppeln von Strahlung zu ermöglichen. Als Sekundär-Strahlungsquelle 17 dient beispielsweise zumindest eine LED (z.B. UV-LED) oder eine Lampe (z.B. eine UVC-Lampe), welche durch ein Schutzfenster 29 geschützt wird.

Fig. 7 zeigt eine weitere Variante der Bauplattform 152, mit einem beweglichen Reflektor 21" (z.B. ein Spiegel), welcher in einem Winkel α (z.B. 45°) zur Bodenplatte 19 geneigt sein kann, um so eine Ausleuchtung der Bodenplatte 19 zu ermöglichen. Die Lichtquelle 17 verfügt dabei bevorzugt über einen zumindest teilweise kollimierten Strahlengang.

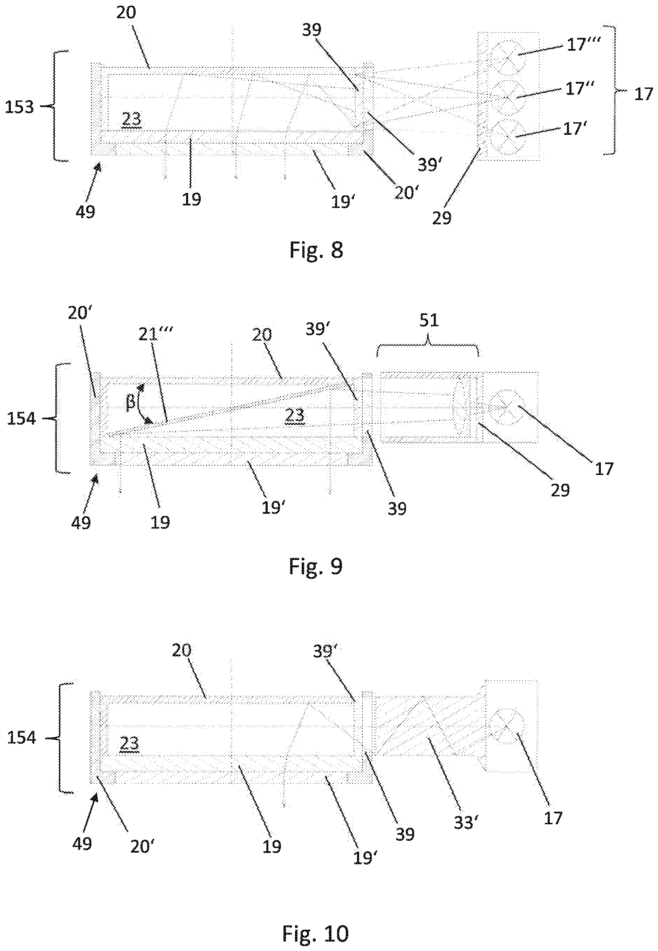

In Fig. 8 ist ähnlich wie in Fig. 7 eine mehrteilige Ausführungsform der Bauplattform 153 in einer Prinzipskizze gezeigt, wobei zur Bereitstellung der Sekundär-Strahlung ein LED-Panel 17, insbesondere mit einzelnen LEDs 17', 17", 17"' usw., zum Einsatz kommt, welches aus zumindest einem LED-Typ mit einer zentralen Wellenlänge, bevorzugt jedoch aus verschiedenen LED-Typen, mit unterschiedlichen zentralen Wellenlängen, z.B. 365, 405, 388nm, aufgebaut sein kann. Die Bauplattform 153 ist z.B. einteilig, ggfs. aber auch mehrteilig ausgeführt, und ein schalenförmiger Unterteil 49 kann samt den zusätzlichen Fenstern 39, 39' und einem Halter 20' von der Bauplattform 153 getrennt werden. Der schalenförmiger Unterteil 49 kann auch einteilig, beispielsweise durch einen transparenten Kunststoffteil, gebildet sein.

Fig. 9 zeigt eine Ausführungsvariante der Bauplattform 154, in der sich ein Spiegel 21"' befindet, der um einen Winkel β zur Bodenplatte 19 geneigt ist und sich im Sekundärstrahlungsraum 23 befindet. Diese Variante verfügt beispielsweise über ein optisches System 51, welches dazu ausgebildet ist, die Sekundär-Strahlung zu kollimieren.

In Fig. 10 ist schließlich ein Ausführungsbeispiel der Bauplattenform 154 veranschaulicht, bei der die Sekundär-Strahlung, s. LED-Einheit 17, wiederum seitlich in die hohle Bauplattform 154 eingekoppelt wird, und zwar über einen Lichtwellenleiter 33' mit Totalreflexion der von der LED-Einheit 17 eingekoppelten Strahlung.

## Patentansprüche

1. Verfahren zum Anhaften eines Objekts (3) an einem Objektträger (15) in einem stereolithografischen Prozess, wobei das Objekt (3) durch Aushärtung einer fotosensitiven Substanz (5) mittels Aushärte-Strahlung gebildet wird, wobei zum Anhaften des Objekts (3) zumindest in einem Teilbereich am Objektträger (15) eine Sekundärstrahlung in einer von der Richtung der Aushärte-Strahlung verschiedenen Richtung zum Objektträger (15) gestrahlt wird, **dadurch gekennzeichnet, dass** die Sekundärstrahlung dem allgemein plattenförmigen, strahlungsdurchlässigen Objektträger (15) seitlich zugeführt und innerhalb des Objektträgers (15) umgelenkt wird.

2. Verfahren nach Anspruch 1, **dadurch gekennzeichnet, dass** die Sekundärstrahlung von der Aushärte-Strahlung abgeleitet wird.

3. Verfahren nach Anspruch 1 oder 2, **dadurch gekennzeichnet, dass** als Sekundärstrahlung eine von der Aushärte-Strahlung unabhängige Strahlung eingesetzt wird.

4. Verfahren nach einem der Ansprüche 1 bis 3, **dadurch gekennzeichnet, dass** die Sekundärstrahlung dem Objektträger (15) über einen Lichtleiter (31) zugeführt wird.

5. Verfahren nach einem der Ansprüche 1 bis 4, **dadurch gekennzeichnet, dass** die Sekundärstrahlung während des Anhaft-Prozesses über einen Anhaftbereich verstellt wird.

6. Vorrichtung zur Durchführung des Verfahrens nach einem der Ansprüche 1 bis 5, **gekennzeichnet durch** eine in Abstand vom Objektträger (15) seitlich angeordnete Sekundärstrahlungsquelle (17), sowie **dadurch, dass** der Objektträger (15) zumindest teilweise für die Sekundärstrahlung durchlässig ist.

7. Vorrichtung nach Anspruch 6, **dadurch gekennzeichnet, dass** die Sekundär-Strahlungsquelle (17) durch einen Lichtleiter (31) gebildet ist.

8. Vorrichtung nach Anspruch 7, **dadurch gekennzeichnet, dass** der Lichtleiter (31) mit einer Stereolithografie-Hauptstrahlungsquelle (9) lichtleitend verbunden ist.

9. Vorrichtung nach Anspruch 6, **dadurch gekennzeichnet, dass** eine von einer Hauptstrahlungsquelle (9) unabhängige Sekundär-Strahlungsquelle (17) vorgesehen ist.

10. Vorrichtung nach einem der Ansprüche 6 bis 9, **dadurch gekennzeichnet, dass** der Objektträger (15) teilweise für die Strahlung durchlässig und zumindest teilweise spiegelnd ausgeführt ist, um die Sekundärstrahlung zu einem Anhaftbereich für das Objekt (3) umzulenken.

11. Vorrichtung nach einem der Ansprüche 6 bis 10, **dadurch gekennzeichnet, dass** der Objektträger (15) eine Spiegelfläche (21) enthält.

12. Vorrichtung nach Anspruch 11, **dadurch gekennzeichnet, dass** die Spiegelfläche (21) diffus spiegelnd ausgeführt ist.

13. Vorrichtung nach Anspruch 11, **dadurch gekennzeichnet, dass** der Objektträger einen beweglich angeordneten Umlenkspiegel (21") enthält.

14. Vorrichtung nach einem der Ansprüche 6 bis 13, **dadurch gekennzeichnet, dass** der Objektträger eine für die Strahlung zumindest teilweise durchlässige Anhaft-Bodenplatte (19) aufweist.

## Claims

1. Method for the adhesive attachment of an object (3) to an object carrier (15) in a stereolithographic process, wherein the object (3) is formed by the curing of a photosensitive substance (5) by means of curing radiation, wherein at least in one partial region of the object carrier (15), a secondary radiation being radiated to the object carrier (15) in a direction that is different from the direction of the curing radiation in order to adhesively attach the object (3), **characterised in that** the secondary radiation is supplied laterally to the generally planar, radiation-permeable object carrier (15) and is deflected within the object carrier (15).

2. Method according to claim 1, **characterised in that** the secondary radiation is derived from the curing radiation.

3. Method according to claim 1 or 2, **characterised in that** a radiation independent of the curing radiation is used as secondary radiation.

4. Method according to any one of claims 1 to 3, **characterised in that** the secondary radiation is supplied to the object carrier (15) via a light guide (31).

5. Method according to any one of claims 1 to 4, **characterised in that** the secondary radiation is adjusted over an adhesion region during the adhesive attachment process.

6. Device for performing the method according to any one of claims 1 to 5, **characterised by** a secondary radiation source (17) arranged laterally at a distance from the object carrier (15), and in that the object carrier (15) is at least partially permeable to the secondary radiation.

7. Device according to claim 6, **characterised in that** the secondary radiation source (17) is formed by a light guide (31).

8. Device according to claim 7, **characterised in that** the light guide (31) is connected to a stereolithography main radiation source (9) in a light-conducting manner.

9. Device according to claim 6, **characterised in that** a secondary radiation source (17) independent of a main radiation source (9) is provided.

10. Device according to any one of claims 6 to 9, **characterised in that** the object carrier (15) is realised to be partially permeable to the radiation and at least partially reflective in order to deflect the secondary radiation to an adhesion region for the object (3).

11. Device according to any one of claims 6 to 10, **characterised in that** the object carrier (15) includes a mirror surface (21).

12. Device according to claim 11, **characterised in that** the mirror surface (21) is realised to be diffusely reflecting.

13. Device according to claim 11, **characterised in that** the object carrier includes a movably arranged deflecting mirror (21").

14. Device according to any one of claims 6 to 13, **characterised in that** the object carrier has an adhesion base plate (19) which is at least partially permeable to the radiation.

## Revendications

1. Procédé destiné à faire adhérer un objet (3) sur un support d'objet (15) dans un processus stéréolithographique, dans lequel l'objet (3) est formé par durcissement d'une substance photosensible (5) au moyen d'un rayonnement durcissant, dans lequel pour faire adhérer l'objet (3) au moins dans une section sur le support d'objet (15) un rayonnement secondaire est irradié dans une direction vers le support d'objet (15) différente de la direction du rayonnement durcissant, **caractérisé en ce que** le rayonnement secondaire est amené latéralement au support d'objet (15) généralement en forme de plaque et perméable au rayonnement, et dévié à l'intérieur du support d'objet (15).

2. Procédé selon la revendication 1, **caractérisé en ce que** le rayonnement secondaire est dérivé du rayonnement durcissant.

3. Procédé selon la revendication 1 ou 2, **caractérisé en ce qu'**un rayonnement indépendant du rayonnement durcissant est mis en place en tant que rayonnement secondaire.

4. Procédé selon l'une des revendications 1 à 3, **caractérisé en ce que** le rayonnement secondaire est amené au support d'objet (15) par un guide de lumière (31).

5. Procédé selon l'une des revendications 1 à 4, **caractérisé en ce que** pendant le processus d'adhérence le rayonnement secondaire est déplacé au-dessus d'une région d'adhérence.

6. Dispositif destiné à réaliser le procédé selon l'une des revendications 1 à 5, **caractérisé par** une source de rayonnement secondaire (17) agencée latéralement à distance du support d'objet (15), ainsi qu'en ce que le support d'objet (15) est perméable au moins partiellement pour le rayonnement secondaire.

7. Dispositif selon la revendication 6, **caractérisé en ce que** la source de rayonnement secondaire (17) est formée par un guide de lumière (31).

8. Dispositif selon la revendication 7, **caractérisé en ce que** le guide de lumière (31) est relié par guidage de lumière à une source de rayonnement principal de stéréolithographie (9).

9. Dispositif selon la revendication 6, **caractérisé en ce qu'**une source de rayonnement secondaire (17) indépendante d'une source de rayonnement principal de stéréolithographie (9) est prévue.

10. Dispositif selon l'une des revendications 6 à 9, **caractérisé en ce que** le support d'objet (15) est conçu partiellement perméable pour le rayonnement et au moins partiellement spéculaire pour dévier le rayonnement secondaire vers une région d'adhérence pour l'objet (3).

11. Dispositif selon l'une des revendications 6 à 10, **caractérisé en ce que** le support d'objet (15) contient une surface réfléchissante (21).

12. Dispositif selon la revendication 11, **caractérisé en ce que** la surface réfléchissante (21) est réalisée spéculairement de façon diffuse.

13. Dispositif selon la revendication 11, **caractérisé en ce que** le support d'objet contient un miroir de déviation (21") agencée de façon mobile.

14. Dispositif selon l'une des revendications 6 à 13, **caractérisé en ce que** le support d'objet présente une plaque de fond d'adhérence (19) au moins partiellement perméable pour le rayonnement.
